# EUROPEAN PATENT APPLICATION

(11) **EP 2 922 256 A1**
(43) Date of publication of application: **23.09.2015**
(21) Application number: 13855693.1
(22) Date of filing: 28.08.2013
(51) Int. Cl.: H04L 12/861

(54) **QUEUE MANAGEMENT METHOD AND APPARATUS**

(30) Priority: 19.11.2012 CN 201210468773
(71) Applicant: ZTE Corporation, Guangdong Province 518057 (CN)
(72) Inventor: YANG, Minhua, Shenzhen Guangdong Province 518057 (CN); SONG, Junhui, Shenzhen Guangdong Province 518057 (CN)
(74) Representative: Novagraaf Technologies
(86) International application number: PCT/CN2013/082483
(87) International publication number: WO 2014/075488

(57) **Abstract**

Provided are a queue management method and apparatus. The method includes: acquiring a packet approximate number of a queue on which a current dequeue is performed, where the packet approximate number is stored inside a queue management component, and the packet approximate number is used for indicating a state of a current number of packets in the queue; and determining the number of times that a dequeue is allowed again for the queue according to the packet approximate number. The technical solutuion solves the problem in the related art that a short packet processing rate does not meet system bandwidth requirement, so as to enhance the efficiency of dequeue (e.g., short packet processing) of a queue, and enhance the performance of a traffic management system.

## Description

### Technical Field

The present invention relates to the field of communications, in particular to a queue management method and apparatus.

### Background

In the field of data communications, the requirement for the quality of service of data products is higher and higher, so higher request is proposed for technique indexes of traffic management, such as the number of queues supported, bandwidth, stepping particle size.

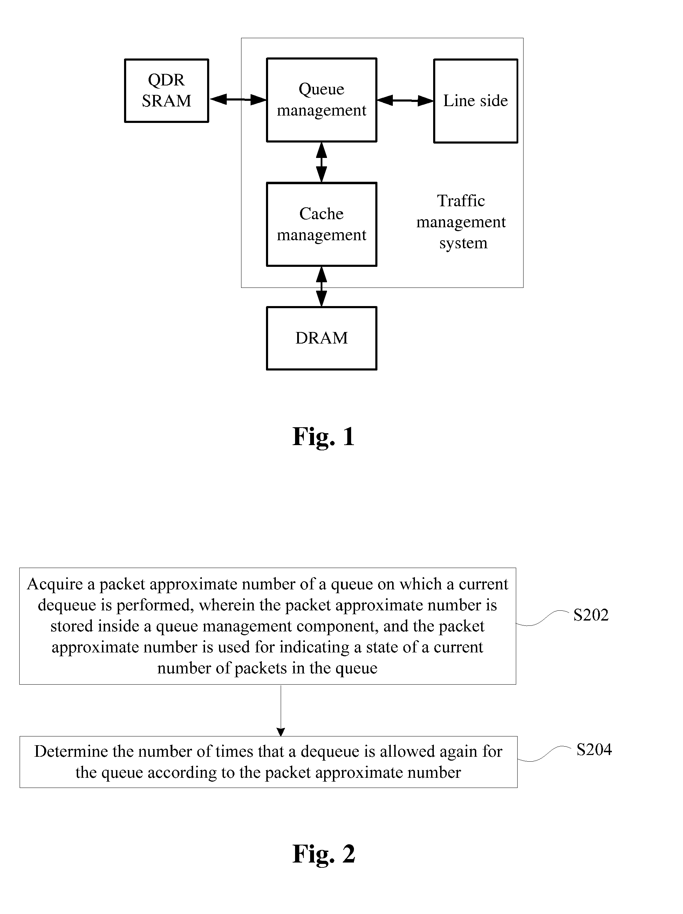

The structural block diagram of a traffic management system is as shown in Fig. 1, including a line-side component, a queue management component and a cache management component.

The queue management component allocates a cache space for the enqueue of a packet, and schedules the dequeue of the packet. If some queue has a packet and is authorized to perform dequeue, dequeue scheduling may be performed on the packet; therefore, the queue management system needs to respectively collect statistics about the number of packets in each queue. The number of queues that requires to be supported by the current traffic management system is larger and larger. In order to save in-chip Static Random Access Memory (SRAM) resources, the statistic result of the number of packets of each queue is stored in an external Quad Data Rate (QDR) SRAM. Since the requirement on the system bandwidth is higher and higher, and clock interval of short-packet processing is shorter and shorter, when the clock interval of short-packet processing is smaller than a clock cycle required by reading delay of the QDR SRAM, the statistic of the number of packets in the QDR SRAM cannot be read out in time, rendering that whether a next dequeuer operation is allowed cannot be determined in time, thus causing the problem that the short-packet processing rate cannot reach the requirement of the system bandwidth.

Regarding at least one problem above in the related art, no effective solution is proposed yet.

### Summary

An embodiment of the present invention provides a queue management method and apparatus, to at least solve the problem in the related art that the short-packet processing rate cannot reach the requirement of system bandwidth.

According to an embodiment of the present invention, a queue management method is provided, which includes: acquiring a packet approximate number of a queue on which a current dequeue is performed, wherein the packet approximate number is stored inside a queue management component, and the packet approximate number is used for indicating a state of a current number of packets in the queue; and determining the number of times that a dequeue is allowed again for the queue according to the packet approximate number.

In an example embodiment, the state includes one of the following: the packet approximate number being equal to 0, the packet approximate number being equal to any number between 1 and N, and the packet approximate number being greater than N, where N is the number of times that a clock cycle, which is required for acquiring the current number of packets in the queue, allows a dequeue of the queue, and the number of packets is stored outside the queue management component.

In an example embodiment, determining the number of times that a dequeue is allowed again for the queue according to the packet approximate number includes: in a case where the packet approximate number is greater than 1, determining that the dequeue is allowed once for the queue; in a case where the packet approximate number is greater than 2, determining that the dequeue is allowed twice for the queue; and for other cases, determining according to the same rule, in a case where the packet approximate number is greater than N, determining that the dequeue is allowed for N times for the queue.

In an example embodiment, the method further includes: in a case where it is determined that the dequeue is allowed again for the queue, subtracting the determined number of times that the dequeue is allowed again for the queue from the number of packets, and determining the state indicated by the packet approximate number again according to the updated number of packets.

In an example embodiment, the method further includes: in a case of an enqueue of the queue, adding 1 to the packet approximate number, and adding 1 to the number of packets.

According to another embodiment of the present invention, a queue management apparatus is provided, which includes: an acquisition module, configured to acquire a packet approximate number of a queue on which a current dequeue is performed, wherein the packet approximate number is stored inside a queue management component, and the packet approximate number is used for indicating a state of a current number of packets in the queue; and a determination module, configured to determine the number of times that a dequeue is allowed again for the queue according to the packet approximate number.

In an example embodiment, the state includes one of the following: the packet approximate number being equal to 0, the packet approximate number being equal to any number between 1 and N, and the packet approximate number being greater than N, where N is the number of times that a clock cycle, which is required for acquiring the current number of packets in the queue, allows a dequeue of the queue, and the number of packets is stored outside the queue management component.

In an example embodiment, the determination module includes :a first determination element, configured to, in a case where the packet approximate number is greater than 1, determine that the dequeue is allowed once for the queue; a second determination element, in a case where the packet approximate number is greater than 2, determine that the dequeue is allowed twice for the queue; and an Nth determination element, configured to, in a case where the packet approximate number is greater than N, determine that the dequeue is allowed for N times for the queue.

In an example embodiment, the queue management apparatus further includes: a first processing module, configured to, in a case where it is determined that the dequeue is allowed again for the queue, subtract the determined number of times that the dequeue is allowed again for the queue from the number of packets, and determine the state indicated by the packet approximate number again according to the updated number of packets.

In an example embodiment, the queue management apparatus further includes: a second processing module, configured to, in a case of an enqueue of the queue, add 1 to the packet approximate number, and add 1 to the number of packets.

In an embodiment of the present invention, a packet approximate number of a queue on which a current dequeue is performed is acquired, wherein the packet approximate number is stored inside a queue management component, and the packet approximate number is used for indicating a state of a current number of packets in the queue; and the number of times that a dequeue is allowed again for the queue is determined according to the packet approximate number. It is realized that a packet approximate number can be acquired rapidly, so as to determine the number of times that a dequeue is allowed again in time. By virtue of the solution, the time required for determining whether a dequeue is allowed again is shortened, thus improving the efficiency of the dequeue of a queue (e.g., short-packet processing), and improving the performance of a traffic management system.

### Brief Description of the Drawings

Drawings, provided for further understanding of the present invention and forming a part of the specification, are used to explain the present invention together with embodiments of the present invention rather than to limit the present invention. In the drawings:
Fig. 1 is a structural block diagram of a traffic management system according to the related art;
Fig. 2 is a flowchart of a queue management method according to an embodiment of the present invention;
Fig. 3 is a structural block diagram of a queue management apparatus according to an embodiment of the present invention;
Fig. 4 is a structural block diagram of a traffic management system using the queue management apparatus according to an embodiment of the present invention;
Fig. 5 is a schematic diagram of an enqueue processing flow using the queue management method according to an embodiment of the present invention; and
Fig. 6 is a schematic diagram of a dequeue processing flow using the queue management method according to an embodiment of the present invention.

### Detailed Description of the Embodiments

The present invention is described below with reference to the accompanying drawings and embodiments in detail. Note that, the embodiments of the present invention and the features of the embodiments can be combined with each other if there is no conflict.

This embodiment provides a queue management method. As shown in Fig. 2, the queue management method includes step S202 to step S204.

Step S202: a packet approximate number of a queue on which a current dequeue is performed is acquired, wherein the packet approximate number is stored inside a queue management component, and the packet approximate number is used for indicating a state of a current number of packets in the queue.

Step S204: the number of times that a dequeue is allowed again for the queue is determined according to the packet approximate number.

By means of the above-mentioned steps, a packet approximate number of a queue on which a current dequeue is performed is acquired, wherein the packet approximate number is stored inside a queue management component, and the packet approximate number is used for indicating a state of a current number of packets in the queue; and the number of times that a dequeue is allowed again for the queue is determined according to the packet approximate number. It is realized that a packet approximate number can be acquired rapidly, so as to determine the number of times that a dequeue is allowed again in time. By virtue of this embodiment, the time required for determining whether a dequeue is allowed is shortened, thus improving the efficiency of the dequeue of a queue (e.g., short-packet processing), and improving the performance of a traffic management system.

In order to reduce the in-chip occupation of storage resources of the queue management component, in this example embodiment, the state includes one of the following: the packet approximate number being equal to 0, the packet approximate number being equal to any number between 1 and N, and the packet approximate number being greater than N, where N is the number of times that a clock cycle, which is required for acquiring the current number of packets in the queue, allows a dequeue of the queue, and the number of packets is stored outside the queue management component. In order to reduce the occupation of storage resources, the state of the packet approximate number may be stored in the form of bits. For example, when N = 1, the state of the packet approximate number required to be stored includes one of the following: packet approximate number = 0, packet approximate number = 1, and packet approximate number > 1, therefore, the state may be stored in the form of 2 bits, with 2'b00 representing that there is no packet (packet approximate number = 0), 2'b01 representing that there is 1 packet (packet approximate number = 1), and 2'b10 representing that there are more than 1 packets (packet approximate number > 1). As another example, when N = 2, the state of the packet approximate number required to be stored includes one of the following: packet approximate number = 0, packet approximate number = 1, packet approximate number = 2, and packet approximate number > 2, therefore, the state may be stored in the form of 2 bits, with 2'b00 representing that there is no packet, 2'b01 representing that there is 1 packet, 2'b10 representing that there are 2 packets, and 2'b11 representing that there are more than 2 packets. As still another example, when N = 3, the state of the packet approximate number includes one of the following: packet approximate number = 0, packet approximate number = 1, packet approximate number = 2, packet approximate number = 3, and packet approximate number > 3, in this case, the state may be stored in the form of 3 bits, with 3'b000 representing that there is no packet, 3'b001 representing that there is 1 packet, and 3'b010 representing that there are 2 packets, 3'b011 representing that there are 3 packets, and 3'b100 representing that there are more than 3 packets. The value of N may be determined according to the clock cycle required for acquiring the number of packets externally stored and the clock cycle interval required between two adjacent times of dequeue of a queue (e.g., short-packet processing). In order to ensure the efficiency of the dequeue of the queue, N is the number of times that the clock cycle, which is required for acquiring the current number of packets in the queue, allows a dequeue of the queue.

In order to determine the number of times that a dequeue is allowed again for a queue in time and rapidly, in this example embodiment, determining the number of times that a dequeue is allowed again for the queue according to the packet approximate number includes: in a case where the packet approximate number is greater than 1, determining that the dequeue is allowed once for the queue; in a case where the packet approximate number is greater than 2, determining that the dequeue is allowed twice for the queue; and for other cases, determining according to the same rule, in a case where the packet approximate number is greater than N, determining that the dequeue is allowed for N times for the queue. That is, when the packet approximate number is greater than 1, a dequeue is allowed once, when the packet approximate number is greater than 2, a dequeue is allowed twice, and so forth, when the packet approximate number is greater than N, a dequeue is allowed for N times. In this way, the determination on whether a dequeue is allowed again according to the externally stored number of packets is avoided, thus shortening the time required for determining a dequeue.

In order to accurately determine whether a dequeue is allowed again, in this example embodiment, the queue management method also includes: in a case where it is determined that the dequeue is allowed again for the queue, subtracting the determined number of times that the dequeue is allowed again for the queue from the number of packets, and determining the state indicated by the packet approximate number again according to the updated number of packets. That is, when acquiring the number of packets, the determined number of times of dequeue allowed is subtracted from the acquired number of packets. For example, when the determined number of times of dequeue allowed is 2, then 2 is subtracted from the acquired number of packets, and the state indicated by the packet approximate number is determined again according to the updated number of packets, so as to ensure that the packer approximate number and the number of packets are in consistency with actual number of packets, and the updated packet approximate number state and number of packets are stored.

In order to accurately determine whether a dequeue is allowed, in this example embodiment, the queue management method also includes: in a case of enqueue of the queue, adding 1 to the packet approximate number, and adding 1 to the number of packets. That is, every time an enqueue is performed, the packet approximate number and the number of packets are updated, so as to ensure that the packet approximate number and the number of packets are in consistency with the current actual number of packets, and the updated packet approximate number and number of packets are stored.

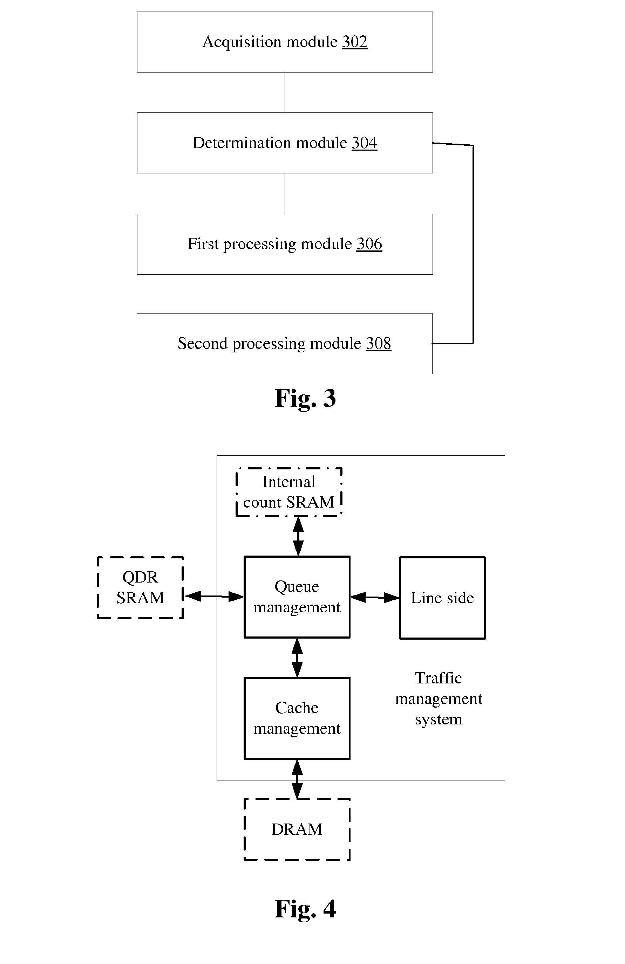

Another example embodiment provides a queue management apparatus. As shown in Fig. 3, the queue management apparatus includes: an acquisition module **302,** configured to acquire a packet approximate number of a queue on which a current dequeue is performed, wherein the packet approximate number is stored inside a queue management component, and the packet approximate number is used for indicating a state of a current number of packets in the queue; and a determination module **304** coupled with the acquisition module **302,** configured to determine the number of times that a dequeue is allowed again for the queue according to the packet approximate number.

In the above-mentioned example embodiment, the acquisition module **302** acquires a packet approximate number of a queue on which a current dequeue is performed, wherein the packet approximate number is stored inside a queue management component, and the packet approximate number is used for indicating a state of a current number of packets in the queue; and the determination module **304** determines the number of times that a dequeue is allowed again for the queue according to the packet approximate number. It is realized that a packet approximate number can be acquired rapidly, so as to determine the number of times that a dequeue is allowed again in time. By virtue of this embodiment, the time required for determining whether a dequeue is allowed again is shortened, thus improving the efficiency of the dequeue of a queue (e.g., short-packet processing), and improving the performance of a traffic management system.

In order to determine the number of times that a dequeue is allowed again in time and rapidly, in this example embodiment, the determination module **304** includes: a first determination element, configured to, in a case where the packet approximate number is greater than 1, determine that the dequeue is allowed once for the queue; a second determination element, configured to, in a case where the packet approximate number is greater than 2, determine that the dequeue is allowed twice for the queue; and an Nth determination element, configured to, in a case where the packet approximate number is greater than N, determine that the dequeue is allowed for N times for the queue.

In order to accurately determine whether a dequeue is allowed again, in this example embodiment, as shown in Fig. 3, the queue management apparatus also includes: a first processing module **306,** configured to, in a case where it is determined that the dequeue is allowed again for the queue, subtract the determined number of times that the dequeue is allowed again for the queue from the number of packets, and determine the state indicated by the packet approximate number again according to the updated number of packets; and a second processing module **308,** configured to, in a case of an enqueue of the queue, to add 1 to the packet approximate number, and add 1 to the number of packets.

Various example embodiments above are described in detail in combination with the accompany drawings in the following.

In this example embodiment, as shown in Fig. 4, an SRAM may be added inside the queue management component to store the packet approximate number (or referred to as internal count). The packet approximate number is used for indicating whether there is another packet in the queue allowed to be dequeued after the current packet dequeue. Since the packet approximate number is stored in an in-chip manner, the time required for acquiring the packet approximate number is short, whether the queue still needs dequeue scheduling can be determined in 1 to 2 clock cycles after the previous packet dequeue. Compared to that it requires N to N + 1 (usually N = 8) clock cycles to give the determination result when directly reading the number of packets in an external QDR SRAM (or referred to as external count) before, short-packet processing interval is greatly shortened.

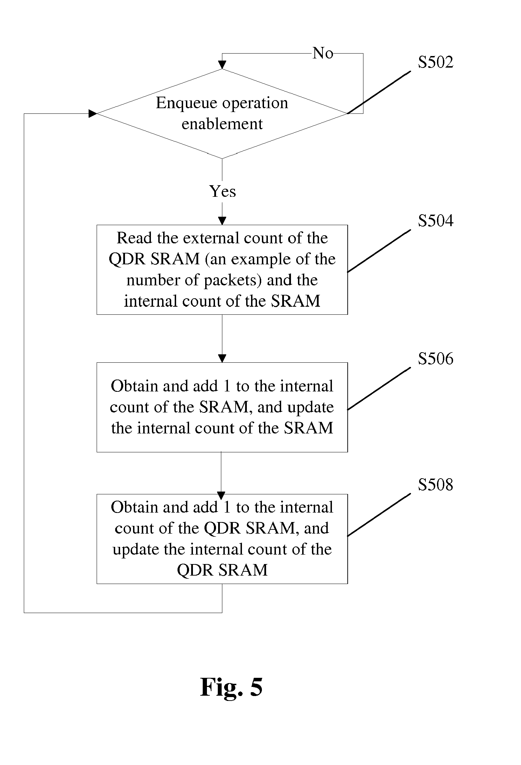

In this example embodiment, the processing flow of the queue management method in terms of the enqueue of a packet in queue management is described in detail taking the scenario below as an example, the short-packet processing interval is 8 clock cycles, QDR SRAM reading delay is 8 clock cycles, the assigned value (the above-mentioned N) of the internal SRAM is 1, which makes the state of the packet approximate number have three different states of being greater than 1, being equal to 1 and being equal to 0, therefore 2 bits are required to represent the state. As shown in Fig. 5, the flow includes the following steps.

Step S502: it is determined whether enqueue operation enablement is received, if yes, turn to step S504, otherwise, continue to execute step S502.

Step S504: enqueue of a queue is performed and the external count of the QDR SRAM (an embodiment of the number of packets) and the internal count of the SRAM (an embodiment of the packet approximate number) are read. For example, an internal count of 2 bits is stored in the SRAM, with 2'b00 representing that there is no packet, 2'b01 representing that there is one packet, and 2'b10 representing that there are more than one packets.

Step S506: the internal count is read out after, for example, 1 clock cycle, 1 is added to the internal count, that is, the original value 2'b00 is updated to 2'b01, the original value 2'b01 is updated to 2'b10, the original value 2'b10 remains 2'b10; and the updated internal count value is stored in the SRAM.

Step S508: the external count is read out after, for example, M clock cycles (the clock cycle is determined according to the external QDR SRAM), 1 is added to the external count, and the updated external count value is stored in the QDR SRAM, and turn to step S502.

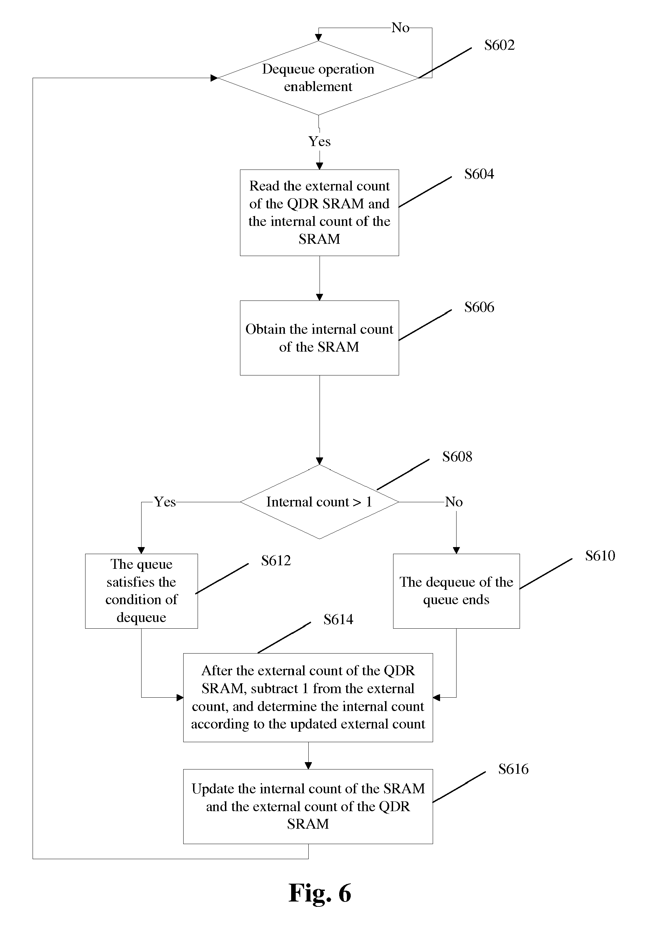

In this example embodiment, the processing flow of the queue management method in terms of the dequeue of a packet in queue management is described in detail taking the scenario below as an example, the short-packet processing interval is 8 clock cycles, QDR SRAM reading delay is 8 clock cycles, the assigned value (the above mentioned N) of the internal SRAM is 1, which makes the state of the packet approximate number have three different states of being greater than 1, being equal to 1 and being equal to 0, therefore 2 bits are required to represent the state. As shown in Fig. 6, the flow includes the following steps.

Step S602: it is determined whether dequeue operation enablement is received, if yes, turn to step S604, otherwise, continue to execute step S602.

Step S604: dequeue of a queue is performed and the external count of the QDR SRAM (an embodiment of the number of packets) and the internal count of the SRAM (an embodiment of the packet approximate number) are read. For example, an internal count of 2 bits is stored in the SRAM, with 2'b00 representing that there is no packet, 2'b01 representing that there is one packet, and 2'b10 representing that there are more than one packets.

Step S606: the internal count is read out after, for example, 1 clock cycle.

Step S608: it is judged whether the internal count of the SRAM is greater than 1, and if the internal count is greater than 1, perform step S612, and if the internal count is not greater than 1, then perform step S610.

Step S610: the queue does not satisfy the condition of dequeue, and the dequeuer flow ends.

Step S612: the queue satisfies the condition of dequeue again, an enqueue and dequeue linked list can be added again.

Step S614: after the external count of the QDR SRAM is obtained, 1 is subtracted from the external count, and the internal count (an example of the packet approximate number) is determined according to the updated external count.

Step S616: the internal count of the SRAM and the external count of the QDR SRAM are updated, and turn to step S602.

It can be seen from the description above that the example embodiments have realized the following technical effects. By means of the above-mentioned steps, a packet approximate number of a queue on which a current dequeue is performed is acquired, wherein the packet approximate number is stored inside a queue management component, and the packet approximate number is used for indicating a state of a current number of packets in the queue; and the number of times that a dequeue is allowed again for the queue according to the packet approximate number is determined. It is realized that a packet approximate number can be acquired rapidly, so as to determine the number of times that a dequeue is allowed again in time. By virtue of the embodiments, the time required for determining whether a dequeue is allowed again is shortened, thus improving the efficiency of the dequeue of a queue (e.g., short-packet processing), and improving the performance of a traffic management system.

Obviously, those skilled in the art should know that each of the mentioned modules or steps of the present invention can be realized by universal computing devices; the modules or steps can be focused on single computing device, or distributed on the network formed by multiple computing devices; selectively, they can be realized by the program codes which can be executed by the computing device; thereby, the modules or steps can be stored in the storage device and executed by the computing device; and under some circumstances, the shown or described steps can be executed in different orders, or can be independently manufactured as each integrated circuit module, or multiple modules or steps thereof can be manufactured to be single integrated circuit module, thus to be realized. In this way, the present invention is not restricted to any particular hardware and software combination.

The descriptions above are only the preferable embodiment of the present invention, which are not used to restrict the present invention, for those skilled in the art, the present invention may have various changes and variations. Any amendments, equivalent substitutions, improvements, etc. within the principle of the present invention are all included in the scope of the protection defined by the claims of the present invention.

## Claims

1. A queue management method, **characterized by** comprising:
acquiring a packet approximate number of a queue on which a current dequeue is performed, wherein the packet approximate number is stored inside a queue management component, and the packet approximate number is used for indicating a state of a current number of packets in the queue;
determining the number of times that a dequeue is allowed again for the queue according to the packet approximate number.

2. The method according to claim 1, **characterized in that** the state comprises one of the following:
the packet approximate number being equal to 0, the packet approximate number being equal to any number between 1 and N, and the packet approximate number being greater than N, where N is the number of times that a clock cycle, which is required for acquiring the current number of packets in the queue, allows a dequeue of the queue, and the number of packets is stored outside the queue management component.

3. The method according to claim 2, **characterized in that** determining the number of times that the dequeue is allowed again for the queue according to the packet approximate number comprises:
in a case where the packet approximate number is greater than 1, determining that the dequeue is allowed once for the queue;
in a case where the packet approximate number is greater than 2, determining that the dequeue is allowed twice for the queue; and
and for other cases, determining according to the same rule, in the case where the packet approximate number is greater than N, determining that the dequeue is allowed for N times for the queue.

4. The method according to claim 2 or 3, **characterized by** further comprising:
in a case where it is determined that the dequeue is allowed again for the queue, subtracting the determined number of times that the dequeue is allowed again for the queue from the number of packets, and determining the state indicated by the packet approximate number again according to the updated number of packets.

5. The method according to claim 2 or 3, **characterized by** further comprising:
in a case of an enqueue of the queue, adding 1 to the packet approximate number, and adding 1 to the number of packets.

6. A queue management apparatus, **characterized by** comprising:
an acquisition module, configured to acquire a packet approximate number of a queue on which a current dequeue is performed, wherein the packet approximate number is stored inside a queue management component, and the packet approximate number is used for indicating a state of a current number of packets in the queue;
a determination module, configured to determine the number of times that a dequeue is allowed again for the queue according to the packet approximate number.

7. The apparatus according to claim 6, **characterized in that** the state comprises one of the following:
the packet approximate number being equal to 0, the packet approximate number being equal to any number in 1 to N, and the packet approximate number being greater than N, where N is the number of times that a clock cycle, which is required for acquiring the current number of packets in the queue, allows a dequeue of the queue, and the number of packets is stored outside the queue management component.

8. The apparatus according to claim 7, **characterized in that** the determination module comprises:
a first determination element, configured to, in a case where the packet approximate number is greater than 1, determine that the dequeue is allowed once for the queue;
a second determination element, in a case where the packet approximate number is greater than 2, determine that the dequeue is allowed twice for the queue; and
an Nth determination element, configured to, in a case where the packet approximate number is greater than N, determine that the dequeue is allowed for N times for the queue.

9. The apparatus according to claim 7 or 8, **characterized by** further comprising:
a first processing module, configured to, in a case where it is determined that the dequeue is allowed again for the queue, subtract the determined number of times that the dequeue is allowed again for the queue from the number of packets, and determine the state indicated by the packet approximate number again according to the updated number of packets.

10. The apparatus according to claim 7 or 8, **characterized by** further comprising:
a second processing module, configured to, in a case of an enqueue of the queue, add 1 to the packet approximate number, and add 1 to the number of packets.
